# EUROPÄISCHE PATENTSCHRIFT

(11) **EP 1 565 672 B1**
(45) Veröffentlichungstag und Bekanntmachung des Hinweises auf die Patenterteilung: **03.03.2010**
(21) Anmeldenummer: 03811738.8
(22) Anmeldetag: 15.10.2003
(51) Int. Cl.: F16H 13/02, F16H 7/02, F02B 67/06, F01P 5/12

(54) **Aggregate-Riementrieb einer Brennkraftmaschine**
Accessories belt drive of an internal combustion engine
Entraînement à courroie pour des accessoires d'un moteur à combustion

(30) Priorität: 26.11.2002 DE 10255073
(43) Veröffentlichungstag der Anmeldung: 24.08.2005
(73) Patentinhaber: Bayerische Motoren Werke Aktiengesellschaft, 80809 München (DE)
(72) Erfinder: LEMBERGER, Heinz, 85774 Unterföhring (DE); WIMMER, Rudolf, A-4431 Haidershofen (AT); FÖSSL, Peter, A-4441 Behamberg (AT); WIESER, Philipp, A-4521 Schiedlberg (AT)
(86) Internationale Anmeldenummer: PCT/EP2003/011406
(87) Internationale Veröffentlichungsnummer: WO 2004/048809

(56) Entgegenhaltungen:
- DE-A- 3 934 884
- GB-A- 461 603
- US-A- 1 391 572
- US-A- 2 823 546
- US-A- 4 822 321

## Beschreibung

Die Erfindung bezieht sich auf einen Aggregate-Riementrieb einer Brennkraftmaschine mit einem Reibradgetriebe mit Steuereinrichtung und Nebenaggregat, wobei das Reibradgetriebe ein in einem Umschlingungsbereich des Riemens eines Triebrades der Brennkraftmaschine oder eines sonstigen Aggregates mit der Außenseite des Riemens reibschlüssig zusammenwirkendes Reibrad sowie ein über dieses Reibrad reibschlüssig antreibbares Antriebsrad eines gesondert angeordneten Nebenaggregates umfasst, wobei das Reibrad mittels einer Steuereinrichtung bedarfsweise in und außer Eingriff mit dem Riemen oder dem Antriebsrad gesteuert ist.

In der nicht vorveröffentlichten deutschen Patentanmeldung P 102 36 746 wurde eine derartige Anordnung anhand grundsätzlicher, schematischer Darstellungen beschrieben, jedoch ohne eine konkret ausgebildete Steuereinrichtung für ein ab- und zuschaltbares Reibrad für einen variablen Antrieb des Nebenaggregates aufzuzeigen.

Die DE 39 34 884 A1 offenbart ein Zugmittelgetriebe einer Brennkraftmaschine zum Antrieb eines Lüfters, wobei der Lüfter indirekt von einem Spannrad eines Riementriebs an der Brennkraftmaschine angetrieben wird. Dazu ist das Spannrad auf einem um die Lüfterwelle schwenkbaren Schwenkbügel gelagert und drehfest mit einem Treibrad verbunden, auf dem wiederum ein mit dem Lüfter verbundenes Antriebsrad abwälzt.

Aufgabe der Erfindung ist, eine Steuereinrichtung für ein ab- und zuschaltbares Reibrad mit einer aufgrund ihres technischen Konzeptes hohen Ausfallsicherheit (failsafe) bei einfachem Aufbau zu schaffen.

Gelöst ist diese Aufgabe mit dem Patentanspruch 1 dadurch, dass die Steuereinrichtung einen das Reibrad tragenden Schwenkarm umfasst, der im reibradfemen Endabschnitt auf einem maschinenseitig drehbeweglich angeordneten Exzenter gelagert ist, über dessen jeweiliger, mittels einer vorgespannt angeordneten Feder bewirkten Drehbewegungsrichtung der Schwenkarm zug- oder druckbeaufschlagt das Reibrad in bzw. außer Eingriff steuert, wobei die Steuereinrichtung ferner einen den Exzenter bedarfsweise in eine jeweilige Gegen - Drehbewegungsrichtung antreibenden hydraulischen Servomotor umfasst.

Die Ausfallsicherheit der erfindungsgemäßen Steuereinrichtung für einen variablen Nebenaggregate-Antrieb ist mittels des unter Federwirkung selbsttätig in eine Zuschaltposition des Nebenaggregates gedrehten Exzenters erzielt, aus der der Exzenter durch einen zuschaltbaren, hydraulischen Servomotor in eine der Abschaltung des Nebenaggregates dienende Gegenposition zur Entfernung des Reibrades vom Antriebsrad des Nebenaggregates gesteuert ist.

Mit der erfindungsgemäßen Steuereinrichtung tritt bei Ausfall des hydraulischen Servomotors kein für den Betrieb der Brennkraftmaschine systemschädlicher Nachteil auf, da bei einem vorzugsweise als Kühlmittelpumpe dienenden Nebenaggregat dieses zwar bei einem Kaltstart der Brennkraftmaschine aufgabengemäß nicht abschaltbar ist, jedoch der Kühlmittelumlauf in jedem Fall gesichert ist.

Vorteilhafte Ausgestaltungen der Erfindung sind in Unteransprüchen angegeben.

Die Erfindung ist anhand eines bevorzugten, in der Zeichnung dargestellten Ausführungsbeispiels beschrieben.

Es zeigt :

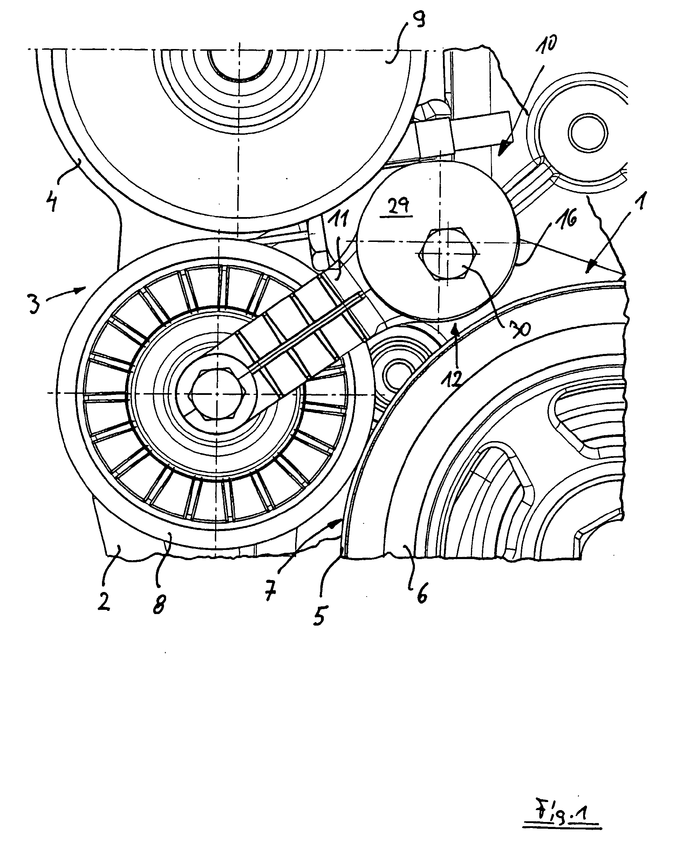

- Fig. 1: ein stirnseitig an einer abschnittsweise gezeigten Brennkraftmaschine mit einem Riementrieb zusammenwirkendes Reibradgetriebe für ein geson- dert angeordnetes insbesondere als Kühlmittelpumpe dienendes Nebenaggregat,

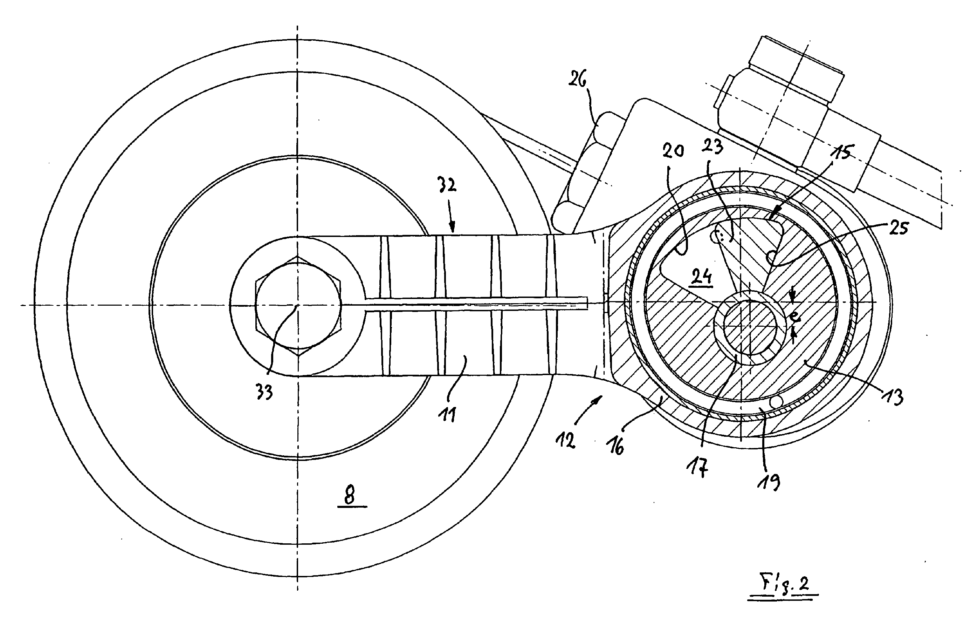

- Fig. 2: die Steuereinrichtung in Stirnansicht mit geschnitten dargestelltem Exzenter im Bereich des hydraulischen Servomotors,
- Fig. 3: die Steuereinrichtung nach Fig.2 im Querschnitt dargestellt, und in

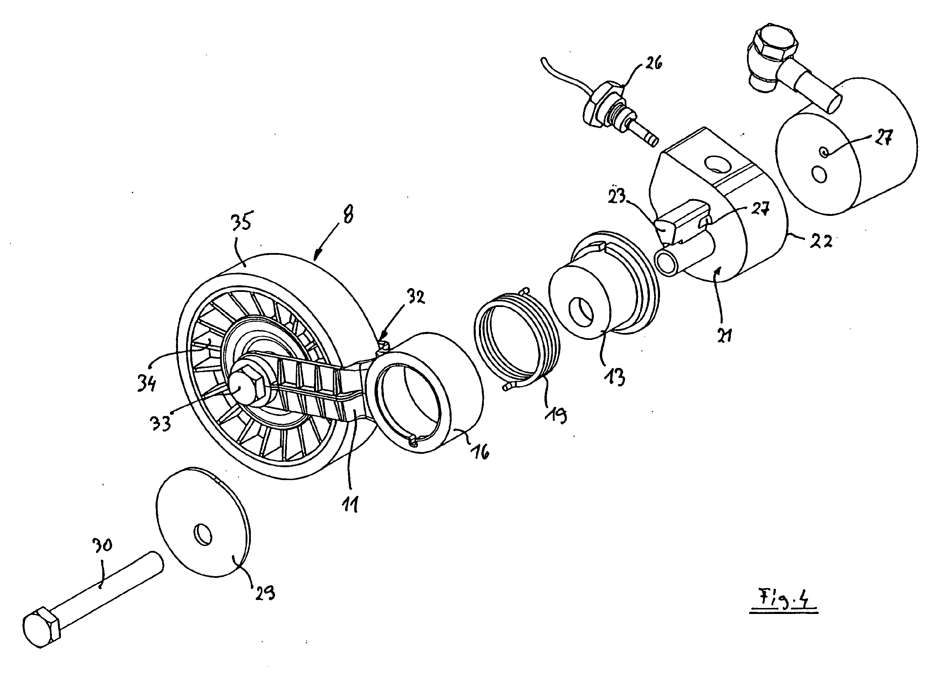

- Fig. 4: die Steuereinrichtung mit vom Schwenkarm getragenen Reibrad in einer Explosionsdarstellung .

In einem Riementrieb 1 für nicht gezeigte Aggregate einer nur abschnittsweise dargestellten Brennkraftmaschine 2 ist ein Reibradgetriebe 3 vorgesehen für ein an der Brennkraftmaschine 2 angeordnetes Nebenaggregat 4, das insbesondere als Kühlmittelpumpe für den Kühlkreislauf der Brennkraftmaschine 2 dient.

Das Reibradgetriebe 3 umfasst ein in einem Umschlingungsbereich des Riemens 5 eines Triebrades 6 der Brennkraftmaschine 2 mit der Außenseite 7 des Riemens 5 reibschlüssig zusammenwirkendes Reibrad 8 sowie ein über dieses Reibrad 8 reibschlüssig antreibbares Antriebsrad 9 einer gesondert angeordneten Kühlmittelpumpe 4. Das Reibrad 8 ist mittels einer Steuereinrichtung 10 insbesondere bei einem Kaltstart der Brennkraftmaschine 2 außer Eingriff mit dem pumpenseitigen Antriebsrad 9 gesteuert.

Zur Erzielung einer konzeptionell bedingt ausfallsicheren Steuereinrichtung 10 ist der das Reibrad 8 tragende Schwenkarm 11 über ein im reibradfemen Endabschnitt 12 angeordnetes Auge 16 auf dem Exzenter 13 gelagert, wobei in einem mittleren Abschnitt zwischen dem Auge 16 und dem auf einem maschinenfest angeordneten Lagerbolzen 17 drehbeweglichen Exzenter 13 ein Ringraum 18 der Anordnung einer vorgespannten Schraubendrehfeder 19 dient. Einer entsprechend gewählten Anordnung der Schraubendrehfeder 19 mit einer am Exzenter 13 einerseits und einer am Schwenkarm-Auge 16 andererseits vorgesehenen Abstützung zum Drehangriff ist das Reibrad 8 über einen auf Zug belasteten Schwenkarm 11 in Wirkeingriff mit der Riemenaußenseite 7 und dem Antriebsrad 9 des Nebenaggregates 4 angeordnet.

Eine kompakte Steuereinrichtung 10 von einfachem Aufbau ist im weiteren dadurch erreicht, dass der Exzenter 13 eine kreissegmentförmige, exzenterachsenseitig vom Lagerbolzen 17 begrenzte Ausnehmung 20 aufweist, die mittels eines mit einer Stirnwand 21 eines Hydraulik-Verteilergehäuses 22 sowie mit dem Lagerbolzen 17 jeweils dicht verbundenen, feststehenden Trennelementes 23 in eine Steuerkammer 24 und in eine Leckagekammer 25 des Servomotors 15 unterteilt ist. Der Exzenter 13 ist mittels eines in die Steuerkammer 24 ventilgesteuert eingeleiteten Drucköls in eine das Reibrad 8 außer Eingriff mit dem Antriebsrad 9 steuernde Gegen-Drehbewegungsrichtung und damit relativ zur Wirkrichtung der vorgespannten Schraubendrehfeder 19 gegensinnig angetrieben, wobei der Exzenter 13 relativ zum feststehenden Trennelement 23 mittels des Drucköles verschwenkt ist.

Der einfache Aufbau der Steuereinrichtung 10 ist weiter dadurch unterstützt, dass das Drucköl aus einem Schmiersystem der Brennkraftmaschine 2 über ein elektromagnetisch gesteuertes Ventil 26 der Steuerkammer 24 zugeführt ist. Das Leckageöl aus der Leckagekammer 25 einerseits sowie druckfreies Öl aus der Steuerkammer 24 andererseits sind über einen Ablaufkanal 27 in die Brennkraftmaschine 2 zurückgeführt.

Zur Steigerung der hydraulischen Wirkung des Servomotors 15 wirkt das feststehende Trennelement 23 mit Gleitflächen der Ausnehmung 20 im Exzenter 13 über eine aufgespritzte Dichtung zusammen.

Weiter ist der Exzentzer 13 zur Erzielung einer größtmöglichen Reibrad-Verstellung mit einer quer zur Zug - oder Druckrichtung des Schwenkarmes 11 gerichteten Exzentrizität "e" in Ausgangslage angeordnet.

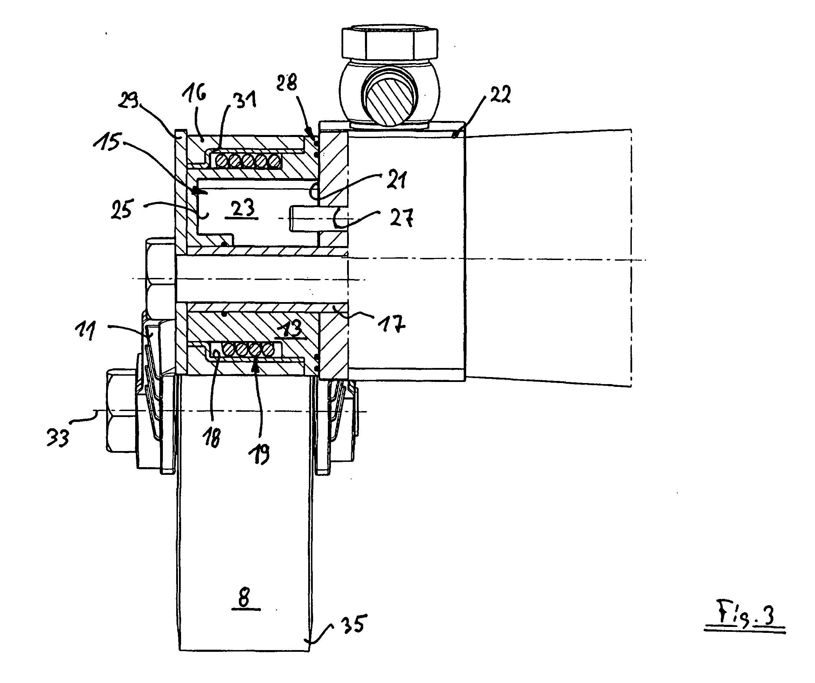

Wie aus Figur 3 ersichtlich, ist der Exzenter 13 unter Zwischenschaltung einer Dichtung 28 drehbeweglich gegen die Stirnwand 21 des Hydraulik - Verteilergehäuses 22 anliegend angeordnet über einen das Auge 16 und den Exzenter 13 mittels eines Abschlussdeckels 29 beaufschlagenden Schraubbolzen 30, der den hohl gestalteten Lagerbolzen 17 und das Hydraulik-Verteilergehäuse 22 durchsetzend die Steuereinrichtung 10 maschinenseitig fest verbindet.

Weiter zeigt Figur 3, dass der aus einem Kunststoff gebildete Schwenkarm 11 mit seinem Auge 16 über eine gestuft gestaltete Metallbuchse 31 auf dem Exzenter 13 gelagert angeordnet ist, und dass der Schwenkarm 11 über eine Führungsgabel 32 mit dem Reibrad 8 verbunden ist, das über ein Wälzlager auf der Gabelachse 33 gelagert ist.

Zur weiteren Erzielung geringer Massen umfasst das Reibrad 8 einen aus Kunststoff gebildeten Speichenkörper 34 mit einer am Außenumfang angeordneten, ggf. austauschbaren Auflage 35 aus einem Gummi- oder Elastomer -Material.

Vorzugsweise ist das Nebenaggregat 4 eine der Brennkraftmaschine 2 dienende Kühlmittelpumpe, insbesondere eine Wasserpumpe, deren Antriebsrad 9 mit dem Reibrad 8 über einen Parameter der Brennkraftmaschine 2 oder mittels eines in einer Motronic abgelegten Kennfeldes gesteuerten Drucköl-Ventils 26 außer Eingriff gebracht und gehalten ist.

Im Rahmen der Erfindung kann die Leckagekammer 25 zur Unterstützung der Schraubendrehfeder 19 für die Aufrechterhaltung des Eingriffes von Reibrad 8 mit Riemenaußenseite 7 und Antriebsrad 9 der Kühlmittelpumpe 4 ebenfalls mit Drucköl beaufschlagt sein.

Eine derartige Beaufschlagung mit Drucköl der Leckagekammer 25 kann auch bei einem erkannten und erfassten Bruch der Schraubendrehfeder 19 gesteuert erfolgen.

## Patentansprüche

1. Aggregate-Riementrieb einer Brennkraftmaschine mit einem Reibradgetriebe mit Steuereinrichtung und Nebenaggregat,
- wobei das Reibradgetriebe (3) umfasst ein in einem Umschlingungsbereich des Riemens (5) eines Triebrades (6) der Brennkraftmaschine (2) oder eines sonstigen Aggregates mit der Außenseite (7) des Riemens (5) reibschlüssig zusammenwirkendes Reibrad (8) sowie ein über dieses Reibrad (8) reibschlüssig antreibbares Antriebsrad (9) eines gesondert angeordneten Nebenaggregates (4), **dadurch gekennzeichnet, dass**
- das Reibrad (8) mittels einer Steuereinrichtung (10) bedarfsweise in und außer Eingriff mit dem Riemen (5) oder dem Antriebsrad (9) gesteuert ist,
- die Steuereinrichtung (10) einen das Reibrad (8) tragenden Schwenkarm (11) umfasst, der
- im reibradfernen Endabschnitt (12) auf einem maschinenseitig drehbeweglich angeordneten Exzenter (13) gelagert ist, über dessen
- jeweiliger, mittels einer vorgespannt angeordneten Feder (14) bewirkten Drehbewegungsrichtung der Schwenkarm (11) zug- oder druckbeaufschlagt das Reibrad (8) in bzw. außer Eingriff steuert, wobei
- die Steuereinrichtung (10) ferner einen den Exzenter (13) bedarfsweise in eine jeweilige Gegen-Drehbewegungsrichtung antreibenden hydraulischen Servomotor (15) umfasst.

2. Aggregate-Riementrieb nach Anspruch 1, **dadurch gekennzeichnet, dass** der Exzenter (13) mit einer quer zur Zug- oder Druckrichtung des Schwenkarmes (11) gerichteten Exzentrizität (e) in Ausgangslage angeordnet ist.

3. Aggregate-Riementrieb nach Anspruch 1 und 2, **dadurch gekennzeichnet,**
- **dass** der Schwenkarm (11) über ein im reibradfernen Endabschnitt (12) angeordnetes Auge (16) auf dem Exzenter (13) gelagert ist, wobei
- in einem axial mittleren Abschnitt zwischen dem Auge (16) und dem auf einem maschinenfest angeordneten Lagerbolzen (17) drehbeweglichen Exzenter (13) ein Ringraum (18) der Anordnung einer vorgespannten Schraubendrehfeder (19) dient, wobei
- mit einer entsprechend gewählten Anordnung der Schraubendrehfeder (19) mit einer am Exzenter (13) einerseits und einer am Schwenkarm-Auge (16) andererseits vorgesehenen Drehangriffs-Abstützung das Reibrad (8) über einen auf Zug belasteten Schwenkarm (11) in Wirkeingriff mit der Riemenaußenseite (7) und dem Antriebsrad (9) des Nebenaggregates (4) angeordnet ist.

4. Aggregate-Riementrieb nach den Ansprüchen 1-3, **dadurch gekennzeichnet,**
- **dass** der Exzenter (13) eine kreissegmentförmige, exzenterachsenseitig vom Lagerbolzen (17) begrenzte Ausnehmung (20) aufweist, die
- mittels eines an einer Stirnwand (21) eines Hydraulik-Verteilergehäuses (22) sowie mit dem Lagerbolzen (17) jeweils dicht verbundenen, feststehenden Trennelementes (23) in eine Steuerkammer (24) und in eine Leckagekammer (25) des Servomotors (15) unterteilt ist, wobei
- der Exzenter (13) mittels eines in die Steuerkammer (24) ventilgesteuert eingeleiteten Drucköls in eine das Reibrad (8) außer Eingriff mit dem Antriebsrad (9) steuernde Gegen-Drehbewegungsrichtung angetrieben ist.

5. Aggregate-Riementrieb nach Anspruch 4, **dadurch gekennzeichnet,**
- **dass** das Drucköl aus einem Schmiersystem der Brennkraftmaschine (2) über ein elektromagnetisch gesteuertes Ventil (26) der Steuerkammer (24) zugeführt ist, und
- **dass** Leckageöl aus der Leckagekammer (25) einerseits sowie druckfreies Öl aus der Steuerkammer (24) andererseits über einen Ablaufkanal (27) in die Brennkraftmaschine (2) zurückgeführt sind.

6. Aggregate-Riementrieb nach Anspruch 4, **dadurch gekennzeichnet,**
- **dass** das feststehende Trennelement (23) des Servomotors (15) mit Gleitflächen der Ausnehmung (20) im Exzenter (13) über eine aufgespritzte Dichtung zusammenwirkt.

7. Aggregate-Riementrieb nach den Ansprüchen 1-6, **dadurch gekennzeichnet,**
- **dass** der Exzenter (13) unter Zwischenschaltung einer Dichtung (28) drehbeweglich gegen die Stirnwand (21) des Hydraulik-Verteilergehäuses (22) anliegend angeordnet ist über
- einen das Auge (16) und den Exzenter (13) mittels eines Abschlussdeckels (29) beaufschlagenden Schraubbolzen (30), der
- den hohl gestalteten Lagerbolzen (17) und das Hydraulik-Verteilergehäuse (22) durchsetzend die Steuereinrichtung (10) maschinenseitig fest verbindet.

8. Aggregate-Riementrieb nach den Ansprüchen 1-7, **dadurch gekennzeichnet,**
- **dass** der aus einem Kunststoff gebildete Schwenkarm (11) mit seinem Auge (16) über eine gestuft gestaltete Metallbuchse (31) auf dem Exzenter (13) gelagert angeordnet ist, und
- **dass** der Schwenkarm (11) über eine Führungsgabel (32) mit dem Reibrad (8) verbunden ist, das
- über ein Wälzlager auf der Gabelachse (33) gelagert ist.

9. Aggregate-Riementrieb nach Anspruch 8, **dadurch gekennzeichnet,**
- **dass** das Reibrad (8) einen aus Kunststoff gebildeten Speichenkörper (34) umfasst mit
- einer am Außenumfang angeordneten, ggf. austauschbaren Auflage (35) aus einem Gummi- oder Elastomer-Material.

10. Aggregate-Riementrieb nach den Ansprüchen 1-9, **dadurch gekennzeichnet,**
- **dass** das Nebenaggregat (4) eine der Brennkraftmaschine (2) dienende Kühlmittelpumpe ist, deren
- Antriebsrad (9) mit dem Reibrad (8) über einen Parameter der Brennkraftmaschine (2) oder mittels eines in einer Motronic abgelegten Kennfeldes gesteuerten Drucköl- Ventils (26) außer Eingriff gebracht und gehalten ist.

11. Aggregate-Riementrieb nach den Ansprüchen 1-10, **dadurch gekennzeichnet,**
- **dass** die Leckagekammer (25) zur Unterstützung der Schraubendrehfeder (19) oder bei Bruch der Schraubendrehfeder (19) gesteuert mit Drucköl beaufschlagbar ist.

## Claims

1. A unit belt drive of an internal combustion engine comprising a friction gear, a control device and a sub-unit,
- wherein the friction gear (3) comprises a friction wheel (8) frictionally co-operating with the outside (7) of a looped region of the belt (5) of a drive wheel (6) of the internal combustion engine (2) or of another unit, and also comprises a driving wheel (9) drivable by friction by the friction wheel (8) and belonging to a separate sub-unit (4), **characterised in that** the friction wheel (8), via a control device (10), is brought into or out of engagement with the belt (5) or the driving wheel (9) as required,
- the control device (10) has a swivel arm (11) bearing the friction wheel (8), and
- the end portion(12) of the swivel arm remote from the friction wheel is mounted on an eccentric (13) which is rotatable on the engine and via which
- the swivel arm (11) moves the friction wheel (8) into or out of engagement, under tension or pressure, depending on the direction of rotation produced by a prestressed spring (14), wherein
- the control device (10) also comprises a hydraulic servomotor (15) which, when required, drives the eccentric (13) in a respective opposite direction of rotation.

2. A unit belt drive according to claim 1, **characterised in that** the eccentric (13) is disposed in the starting position with an eccentricity (e) directed transversely of the direction of tension or pressure exerted by the swivel arm (11).

3. A unit belt drive according to claims 1 and 2, **characterised in that**
- the swivel arm (11) is mounted on the eccentric (13) on an eyelet (16) disposed in the end portion (12) remote from the friction wheel, wherein
- an annular space (18) for disposing a prestressed helical torsion spring (19) is provided in an axially central portion between the eyelet (16) and the eccentric (13), which is rotatable on a bearing pin (17) fixed to the engine, wherein
- by means of a suitably chosen arrangement of the helical torsion spring (19) with a rotary drive support provided on the one hand on the eccentric (13) and on the other hand on the eyelet (16), the friction wheel (8), via a tensioned swivel arm (11), is disposed in operating engagement with the outside (7) of the belt and with the driving wheel (9) of the sub-unit (4).

4. A unit belt drive according to claims 1 - 3, **characterised in that**
- the eccentric (13) has a circular segmental recess (20) bounded on the eccentric-axis side by the bearing pin (17),
- the recess (20) is divided into a control chamber (24) and a leakage chamber (25) of the servomotor (15), by means of a stationary separating element (23) tightly connected to an end wall (21) of a hydraulic distribution housing (22) and to the bearing pin (17), wherein
- the eccentric (13), by means of pressure oil introduced into the control chamber (24) under the control of a valve, is driven in an opposite direction of rotation, moving the friction wheel (8) out of engagement with the driving wheel (9).

5. A unit belt drive according to claim 4, **characterised in that**
- the pressure oil is conveyed from a system for lubricating the engine (2) to the control chamber (24) through an electromagnetically controlled valve (26) and
- leakage oil from the leakage chamber (25) and pressure-free oil from the control chamber (24) is returned to the engine (2) through a drain passage (27).

6. A unit belt drive according to claim 4, **characterised in that**
- the stationary separating element (23) of the servomotor (15) cooperates with sliding surfaces of the recess (20) in the eccentric (13) via a sprayed-on seal.

7. A unit belt drive according to claims 1 - 6, **characterised in that**
- the eccentric (13), with interposition of a seal (28), is rotatably pushed against the end wall (21) of the hydraulic distribution housing (22) via
- a screw bolt (30) which acts on the eyelet (16) and the eccentric (13) via a closure cover (29) and
- firmly connects the bearing pin (17), which is hollow, to the hydraulic distribution housing (22) by extending through the control device (10) on the engine side.

8. A unit belt drive according to claims 1 - 7, **characterised in that**
- the eyelet (16) of the swivel arm (11), which is made of plastic, is mounted on the eccentric (13) via a stepped metal bush (31), and
- the swivel arm (11), via a guide fork (32), is connected to the friction wheel (8) which
- is mounted on the fork axis (33) via a rolling bearing.

9. A unit belt drive according to claim 8, **characterised in that**
- the friction wheel (8) comprises a plastic spoked member (34) with
- a rubber or elastomer covering (35) disposed on the outer periphery and replaceable when required.

10. A unit belt drive according to claims 1 - 9, **characterised in that**
- the sub-unit (4) is a coolant pump for the engine (2), and its
- driving wheel (9) is brought and held out of engagement with the friction wheel (8) via a parameter of the engine (2) or by means of a pressure-oil valve (26) actuated by a performance graph deposited in a Motronic.

11. A unit belt drive according to claims 1 - 10, **characterised in that**
- the leakage chamber (25) is supplied with pressure oil in a controlled manner in order to assist the helical torsion spring (19) or if the spring (19) breaks.

## Revendications

1. Unité d'entraînement à courroie pour moteur à combustion comportant une transmission à roue à friction avec une installation de commande et une unité auxiliaire,
- la transmission à roue à friction (3) ayant une roue à friction (8) coopérant par friction dans la zone d'enveloppement avec le côté extérieur (7) de la courroie (5) d'une roue d'entraînement (6) du moteur à combustion (2) ou autre unité, ainsi qu'une roue d'entraînement (9) d'une unité accessoire (4) installée de manière particulière et entraînée par une liaison par friction par cette roue à friction (8),
**caractérisée en ce que**
- la roue à friction (8) est commandée par une installation de commande (10) pour être mise eh prise ou hors prise, à la demande, avec la courroie (5) ou la roue d'entraînement (9),
- l'installation de commande (10) comprend un bras pivotant (11) portant la roue à friction (8),
- ce bras ayant un segment d'extrémité (12) éloigné de la roue à friction, monté sur un excentrique (13) installé de manière mobile en rotation du côté de la machine,
- qui respectivement par l'intermédiaire d'un ressort précontraint (14) produisant le mouvement de rotation du bras pivotant (11), assure la commande de venue en prise ou hors de prise du bras pivotant (11) qui sollicite en traction ou en poussée la roue à friction (8),
- l'installation de commande (10) comportant en outre un servomoteur hydraulique (15) entraînant l'excentrique (13), à la demande dans le sens contraire du mouvement de rotation respectif.

2. Unité d'entraînement à courroie selon la revendication 1,
**caractérisée en ce que**
l'excentrique (13) est installé en position de sortie avec son excentricité (e) dirigée transversalement par la direction de traction ou de poussée du bras pivotant (11).

3. Unité d'entraînement à courroie selon les revendications 1 et 2,
**caractérisée en ce que**
- le bras pivotant (11) est monté par l'intermédiaire d'un l'oeillet (16) prévu au niveau du segment d'extrémité (12) éloigné de la roue à friction sur l'excentrique (13),
- un volume annulaire (18) dans un segment axial médian entre l'oeillet (16) et l'excentrique (13) mobile en rotation sur un manchon de palier (17) solidaire du moteur, reçoit un ressort hélicoïdal (19), précontraint,
- une disposition sélectionnée de manière correspondante du ressort hélicoïdal (19) avec un appui de prise de rotation d'une part sur l'excentrique (13) et d'autre part, sur l'oeillet (16) du bras pivotant, mettant la roue à friction (8) en prise de coopération par le bras pivotant (11) sollicité en traction, avec le côté extérieur (7) de la courroie et avec la roue d'entraînement (9) de l'unité auxiliaire (4).

4. Unité d'entraînement à courroie selon les revendications 1 à 3,
**caractérisée en ce que**
- l'excentrique (13) a une cavité (20) en forme de secteur de cercle, délimité du côté de l'axe d'excentrique par le manchon de palier (17),
- cette cavité étant subdivisée par un élément de séparation (23), fixe, de la paroi frontale (21) d'un boîtier de distributeur hydraulique (22) ainsi que par le manchon de palier (17), en étant relié de manière étanche, cet élément séparateur se subdivise en une chambre de commande (24) et en une chambre de fuite (25) du servomoteur (15),
- l'excentrique (13) étant entraîné par de l'huile sous pression arrivant dans la chambre de commande (24) de façon commandée par une vanne, pour être entraîné suivant un mouvement de rotation opposé, et commander la roue à friction (8) pour la mettre hors de prise de la roue d'entraînement (9).

5. Unité d'entraînement à courroie selon la revendication 4,
**caractérisée en ce que**
- l'huile sous pression arrive du système de lubrification du moteur à combustion (2) par l'intermédiaire d'une électrovanne (26) dans la chambre de commande (24), et
- l'huile de fuite est évacuée de la chambre de fuite (25) d'une part, ainsi que de l'huile sans pression est fournie d'autre part, de la chambre de commande (24) par un canal de sortie (27) au moteur à combustion (2).

6. Unité d'entraînement à courroie selon la revendication 4,
**caractérisée en ce que**
- l'élément séparateur (23) fixe du servomoteur (15), coopère avec les surfaces de glissement de la cavité (20) de l'excentrique (13) par un joint ajusté.

7. Unité d'entraînement à courroie selon les revendications 1 à 6,
**caractérisée en ce que**
- l'excentrique (13) est appliqué avec interposition d'un joint (28) de manière mobile en rotation contre la paroi frontale (21) du boîtier distributeur hydraulique (22), par
- la vis (30) s'appliquant sur l'oeillet (16) et l'excentrique (13) par l'intermédiaire d'un couvercle de fermeture (29),
- cette vis assemblant le manchon de palier (17) et en traversant le boîtier distributeur hydraulique (22) et l'installation de commande (10) solidairement du côté du moteur.

8. Unité d'entraînement à courroie selon les revendications 1 à 7,
**caractérisée en ce que**
- le bras pivotant (11) en matière plastique est monté par son oeillet (16) sur l'excentrique (13) par l'intermédiaire d'un coussinet métallique (31) étagé, et
- le bras pivotant (11) est relié à la roue à friction (8) par une fourche de guidage (32),
- cette roue étant montée sur l'axe de la fourche (33) par l'intermédiaire d'un palier à roulement.

9. Unité d'entraînement à courroie selon la revendication 8,
**caractérisée en ce que**
- la roue à friction (8) comporte un organe à rayons (34) en matière plastique, avec
- un appui (35) en caoutchouc ou en élastomère, installé à la périphérie et le cas échéant remplaçable.

10. Unité d'entraînement à courroie selon les revendications 1 à 9,
**caractérisée en ce que**
- l'unité accessoire (4) est la pompe à liquide de refroidissement du moteur à combustion (2), dont
- la roue d'entraînement (9) est mise hors de prise de la roue à friction (8) ou est maintenue par une vanne d'huile sous pression (26) commandée par un paramètre du moteur à combustion (2) ou par l'intermédiaire d'un champ de caractéristiques enregistrées dans l'électronique du moteur.

11. Unité d'entraînement à courroie selon les revendications 1 à 10,
**caractérisée en ce que**
- la chambre de fuite (25) reçoit de manière commandée de l'huile sous pression pour soutenir le ressort hélicoïdal (19) ou en cas de rupture du ressort hélicoïdal (19).
